# EUROPEAN PATENT SPECIFICATION

(11) **EP 4 449 019 B1**
(45) Date of publication and mention of the grant of the patent: **11.02.2026**
(21) Application number: 22829543.2
(22) Date of filing: 01.12.2022
(51) Int. Cl.: F23D 14/06, F23D 14/58

(54) **BURNER HEAD FOR COOKTOP, BURNER, AND COOKTOP**
BRENNERKOPF FÜR EIN KOCHFELD, BRENNER UND KOCHFELD
TÊTE DE BRÛLEUR POUR TABLE DE CUISSON, BRÛLEUR ET TABLE DE CUISSON

(30) Priority: 14.12.2021 CN 202123140010 U
(43) Date of publication of application: 23.10.2024
(73) Proprietor: BSH Hausgeräte GmbH, 81739 München (DE)
(72) Inventor: MA, Jianxiang, Nanjing, Jiangsu 210046 (CN); WU, Jinhua, Nanjing City, Jiangsu Province, Jiangsu 210000 (CN)
(86) International application number: PCT/EP2022/084055
(87) International publication number: WO 2023/110435

(56) References cited:
- CN-A- 111 735 052
- CN-U- 210 861 084
- US-A1- 2013 252 183
- US-A1- 2017 138 605

## Description

### TECHNICAL FIELD

This application relates to the field of cooktops, and in particular, to a burner head for a cooktop, a burner, and a cooktop.

### BACKGROUND

The prior art CN209655367U discloses a burner and a cooktop including the same, where the burner includes a burner cap and a base. The burner cap is covered on the base, and a detachable adjustment ring is arranged between the burner cap and the base. By assembling and disassembling the adjustment ring, when a first gas channel is in communication with a first burner hole, a second gas channel and a second burner hole are blocked, or when the second gas channel is in communication with the second burner hole, the first gas channel and the first burner hole are blocked.

The CN210861084U describes a burner comprising a base, an outer-ring gas mixing chamber arranged on the base, an inner-ring burner cap and an outer-ring burner cap, and a central connecting plate.

The US2013252183A1 shows a gas burner having a burner base with inner and outer upwardly open annular base chambers each connected to a respective gas supply. An inner burner on the burner base has gas outlet orifices that create an inner flame ring. An annular outer burner on the burner base has inner gas outlet orifices on its inner annular periphery creating an intermediate flame ring and outer gas outlet orifices on its outer annular periphery creating an outer flame ring

The US2017138605A1 discloses a gas burner assembly includes a grate configured for supporting a cooking utensil. The grate defines an internal fuel passage. The internal fuel passage of the grate extends to a burner such that fuel is directed to the burner via the internal fuel passage of the grate.

CN11735052A discloses a burner for a gas cooker comprising a fire cover body with a first cavity and a second cavity. The fire cover body is provided with first inner ring fire holes communicating with the first cavity and with second inner ring fire holes communicating with the second cavity.

### SUMMARY

An objective of embodiments of the present invention is to provide an improved burner head for a cooktop, a burner, and a cooktop. An aspect of the embodiments of the present invention relates to a burner head for a cooktop in accordance with claim 1.

Since such a structure is adopted, the inner-ring burner holes and the outer-ring burner holes are integrated and arranged on the same burner cap, so that a quantity of burner caps is reduced, which not only simplifies the structure of the burner head, but also helps to improve the production efficiency of the burner cap and even the entire cooktop. In addition, after an inner-ring burner cap is omitted, the middle of the burner cap is a plane, which is convenient for a user to clean a central region of the burner head and improves the appearance of the burner head.

Although the inner-ring burner holes and the outer-ring burner holes are integrated on the same burner cap, the inner-ring burner holes and the outer-ring burner holes are structurally independent of each other. The inner-ring burner holes are in communication with the inner-ring chamber, and the outer-ring burner holes are in communication with the outer-ring chamber, so that independent control of inner-ring fire and outer-ring fire can be implemented functionally.

In addition, because the inner-ring burner holes and the outer-ring burner holes are arranged on the same burner cap, a distance between the inner-ring burner holes and the outer-ring burner holes is relatively small, and fire can be spread without using a complex fire spread structure, which can further simplify the structure and improve the cost effectiveness.

According to an exemplary implementation of the present invention, the inner-ring burner holes run through the inner side wall and extend obliquely upward toward a central region of the burner cap, and the outer-ring burner holes are located above the inner-ring burner holes. Therefore, because the inner-ring burner holes extend obliquely upward toward the central region of the burner cap, the inner-ring fire will gather toward the middle and upward, which is not only beneficial to spreading fire from the inner-ring burner holes to the outer-ring burner holes, but also beneficial to improving the thermal efficiency.

According to an exemplary implementation of the present invention, a circle of flame-stabilizing grooves connected end to end and facing a central region of the burner cap are circumferentially arranged on the inner side wall, and the flame-stabilizing grooves are in communication with the inner-ring chamber through the inner-ring burner holes. Therefore, gas in the inner-ring chamber flows to the flame-stabilizing grooves through the inner-ring burner holes and then is ignited, which makes the flame more stable and even.

According to an exemplary implementation of the present invention, there are a plurality of rows of outer-ring burner holes, and a distance between the inner-ring burner holes and the closest outer-ring burner holes in a vertical direction is 4 mm. Therefore, because the distance between the inner-ring burner holes and the outer-ring burner holes in the vertical direction is relatively small, it helps the inner-ring burner holes to spread fire quickly to the closest outer-ring burner holes, thereby improving the fire spread efficiency.

According to the present invention, the inner-ring burner holes extend obliquely upward toward the central region of the burner cap, the outer-ring burner holes run through the ring-shaped top wall and extend obliquely upward, and an extension direction of the inner-ring burner holes intersects an extension direction of the outer-ring burner holes. Therefore, even if there is no complex fire spread structure, fire may be spread from the inner-ring burner holes to the outer-ring burner holes, thereby simplifying the structure of the burner cap and improving the cost effectiveness.

According to an exemplary implementation of the present invention, the burner cap is ring-shaped, an intersection point at which an extension direction of the inner-ring burner holes intersects an extension direction of the outer-ring burner holes is located in a central region of the ring-shaped burner cap, and a height of the intersection point in a vertical direction does not exceed a top-end wall of the burner cap. Therefore, at the beginning of the ignition, the fire spread speed may be improved, thereby improving the working performance and combustion efficiency of the burner.

According to an exemplary implementation of the present invention, an angle at which the inner-ring burner holes are inclined upward relative to a horizontal plane is greater than an angle at which the outer-ring burner holes are inclined upward relative to the horizontal plane. In this way, the extension direction of the inner-ring burner holes may intersect the extension direction of the outer-ring burner holes. Even if there is no fire spread structure, the fire spread problem can be resolved, and good fire spread performance is achieved.

According to an exemplary implementation of the present invention, an angle at which the inner-ring burner holes are inclined upward relative to a horizontal plane is 45 degrees.

According to an exemplary implementation of the present invention, the outer-ring burner holes include a plurality of rows of flame-stabilizing holes and main burner holes arranged on the ring-shaped top wall, a diameter of the flame-stabilizing holes is less than that of the main burner holes, and a row of outer-ring burner holes close to the inner-ring burner holes are all flame-stabilizing holes. Therefore, because the diameter of the flame-stabilizing holes is less than that of the main burner holes, it makes the flame more stable when fire is spread from the inner-ring burner holes to the outer-ring burner holes, thereby improving the fire spread efficiency.

According to an exemplary implementation of the present invention, the burner cap base includes a first groove recessed inwardly and the second groove surrounding the first groove, a spacer is arranged between the first groove and the second groove, and the inner-ring chamber and the outer-ring chamber are isolated from each other by the spacer. Therefore, the inner-ring chamber and the outer-ring chamber are isolated from each other by the spacer without affecting each other, and outflow of gas from the inner-ring burner holes and the outer-ring burner holes is controlled effectively.

Another aspect of the embodiments of the present invention, relates to a burner, including the burner head and a burner base, where the burner head is detachably placed on the burner base.

According to an exemplary implementation of the present invention, an ignition pin arranged on the burner base is further included, where a distance from the inner-ring burner holes to the ignition pin is less than a distance from the outer-ring burner holes to the ignition pin. Therefore, during ignition, the gas is preferentially ignited in the inner-ring burner holes, and then, fire is spread to the gas flowing out of the outer-ring burner holes, so that fire is spread quickly.

According to an exemplary implementation of the present invention, the burner head base includes an inner-ring pressure-stabilizing chamber in communication with an inner-ring ejector tube and an outer-ring pressure-stabilizing chamber matching an outer-ring ejector tube, where a volume of the outer-ring pressure-stabilizing chamber is greater than that of the inner-ring pressure-stabilizing chamber. Therefore, more gas can be accommodated in the outer-ring pressure-stabilizing chamber, and enough gas is provided for the outer-ring burner holes, so that the outer-ring fire burns more fully and the flame is more even.

According to an exemplary implementation of the present invention, the burner head base further includes a plurality of outer-ring gas outlets in communication with the outer-ring pressure-stabilizing chamber and an inner-ring gas outlet in communication with the inner-ring pressure-stabilizing chamber, after passing through the inner-ring ejector tube, gas enters the inner-ring pressure-stabilizing chamber and then enters the inner-ring chamber through the inner-ring gas outlet, and after passing through the outer-ring ejector tube, the gas enters the outer-ring pressure-stabilizing chamber and then enters the outer-ring chamber through the outer-ring gas outlets, and a quantity of the inner-ring gas outlets is less than a quantity of the outer-ring gas outlets.

According to an exemplary implementation of the present invention, there are three outer-ring gas outlets and one inner-ring gas outlet. In this way, the outer-ring fire is more even, which is beneficial to improving the cooking effect and user experience. The present disclosure further provides a cooktop, including the burner.

### BRIEF DESCRIPTION OF THE DRAWINGS

FIG. 1 is a schematic partial three-dimensional view of a cooktop according to an embodiment of the present invention;
FIG. 2 is a schematic partial three-dimensional view of a burner according to an embodiment of the present invention;
FIG. 3 is a partial cross-sectional view of a burner head according to an embodiment of the present invention;
FIG. 4 is a schematic three-dimensional view of a burner cap according to an embodiment of the present invention;
FIG. 5 is a partial cross- sectional view of FIG. 4 in one direction;
FIG. 6 is a schematic three-dimensional view of a burner cap base according to an embodiment of the present invention; and
FIG. 7 is a partial cross-sectional view of a burner cap according to an embodiment of the present invention.

### List of Reference Numerals:

| Cooktop 100 | Burner head 200 | Burner cap 201 | Burner cap base 202 |
|---|---|---|---|
| Inner-ring chamber 203 | Outer-ring chamber 204 | Inner-ring burner hole 205 | Outer-ring burner hole 206 |
| Inner side wall 207 | Outer side wall 208 | Flame-stabilizing groove 209 | Flame-stabilizing hole 210 |
| Main burner hole 211 | First groove 212 | Second groove 213 | Third groove 214 |
| Fourth groove 215 | Spacer 216 | Ring-shaped top wall 217 | Top-end wall 218 |
| Inner-ring gas inlet 219 | Outer-ring gas inlet 220 | | |
| Burner base 300 | Ejector tube 301 | Inner-ring ejector tube 302 | Outer-ring ejector tube 303 |
| Gas pressure-stabilizing chamber 304 | Inner-ring gas outlet 305 | Outer-ring gas outlet 306 | Burner 400 |

### DETAILED DESCRIPTION

For a further understanding of the objectives, structures, features and functions of this application, a detailed description is made below with reference to embodiments.

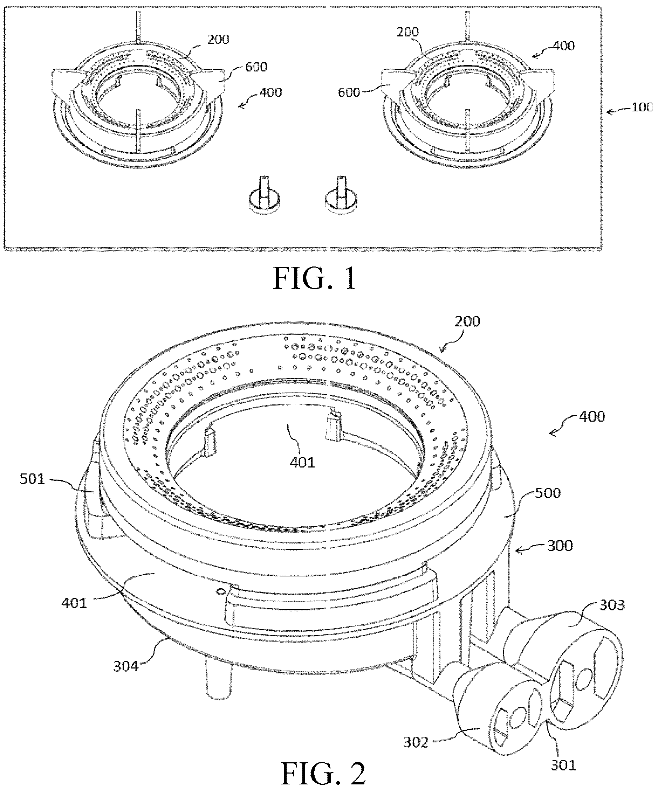

FIG. 1 is a schematic partial three-dimensional view of a cooktop 100 according to an embodiment of the present invention.

The cooktop 100 includes a panel and a burner 400 disposed on the panel.

As shown in FIG. 2, the burner 400 includes a burner head 200 and a burner base 300, where the burner head 200 is detachably placed on the burner base 300.

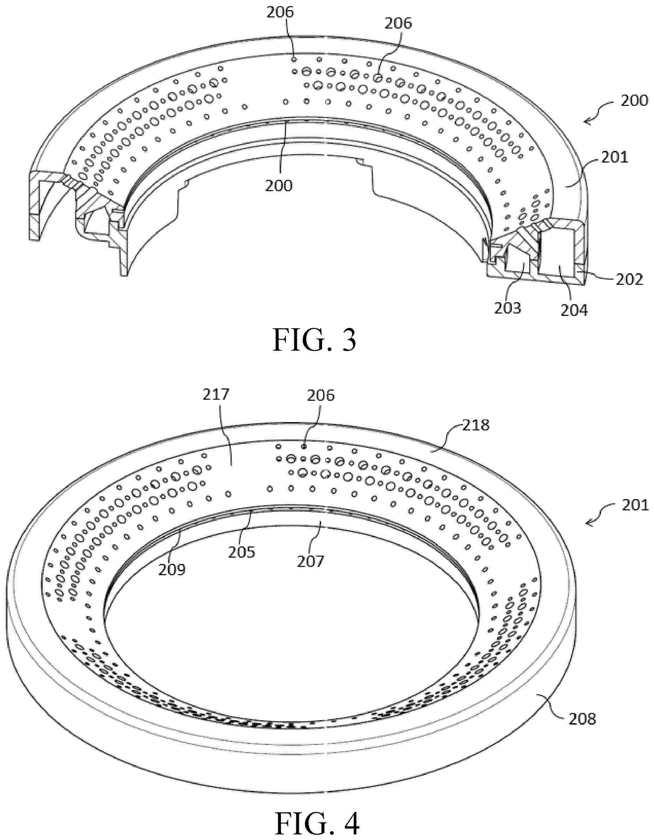

As shown in FIG. 3, a burner head 200 includes a burner cap 201 and a burner cap base 202, where the burner cap 201 is covered on the burner cap base 202.

The burner cap 201 matches the burner cap base 202 to form an inner-ring chamber 203 and an outer-ring chamber 204.

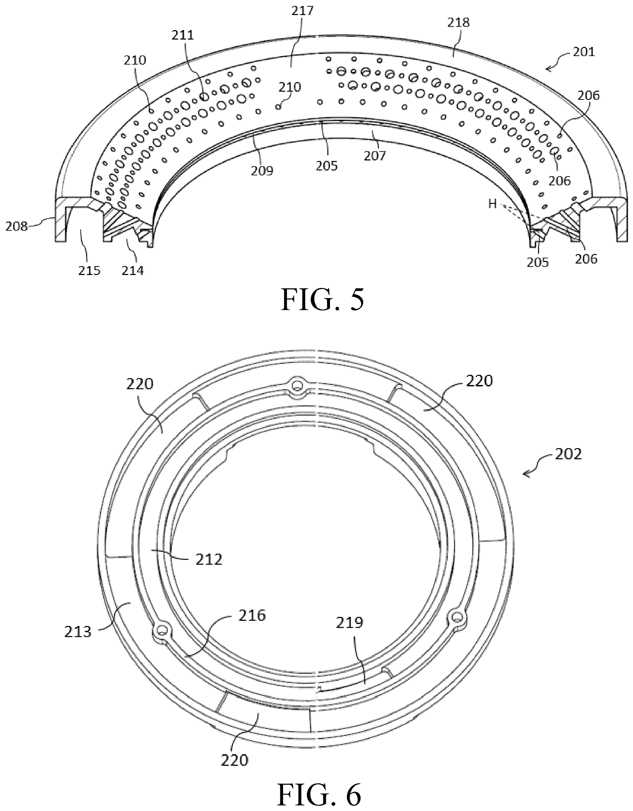

As shown in FIG. 4 and FIG. 5, the burner cap 201 is provided with a plurality of inner-ring burner holes 205 in communication with the inner-ring chamber 203 and a plurality of outer-ring burner holes 206 in communication with the outer-ring chamber 204. The inner-ring burner holes 205 and the outer-ring burner holes 206 are used for gas outflow respectively, and the gas flowing out from the inner-ring burner holes 205 and the outer-ring burner holes 206 is ignited to form a flame.

The burner cap 201 includes an inner side wall 207 and an outer side wall 208 disposed opposite to each other. The outer side wall 208 is a side wall of the burner cap exposed to the outside. The inner side wall 207 is a side wall close to a center of the burner cap and opposite to the outer side wall 208. In this embodiment, the burner cap is ring-shaped, and the inner side wall 207 and the outer side wall 208 form ring-shaped walls respectively.

The burner cap 201 further includes a ring-shaped top wall 217 located between the inner side wall 207 and the outer side wall 208 and extending obliquely downward. The ring-shaped top wall 217 faces a central region of the burner cap, and the ring-shaped top wall 217 forms a slope toward the central region of the burner cap. In a direction from top to bottom, a distance between the ring-shaped top wall 217 and a central axis of the burner cap is increasingly small.

The burner cap 201 further includes a top-end wall 218 connecting the outer side wall 208 and the ring-shaped top wall 217. The top-end wall 218 is located at an end of the burner cap and perpendicular to the outer side wall 208.

As shown in the figure, inner-ring burner holes 205 and outer-ring burner holes 206 are integrated and disposed on the same burner cap 201. The inner-ring burner holes 205 are circumferentially arranged spaced apart on the inner side wall 207, the outer-ring burner holes 206 are circumferentially arranged spaced apart on the ring-shaped top wall 217, and the outer-ring burner holes 206 are located above the inner-ring burner holes 205.

In this way, not only the structures of the burner cap 201 and the burner head 200 are simplified, which is beneficial to improving the production efficiency of the burner cap 201 and the entire cooktop 100, but also the distance between the inner-ring burner holes 205 and the outer-ring burner holes 206 is reduced, so that the fire spread can be achieved without using a complex fire spread structure, thereby further improving the cost effectiveness.

In this embodiment, the inner side wall 207 is provided with a row of inner-ring burner holes 205, and the inner-ring burner holes 205 are evenly distributed on a side wall, thereby forming a circle of the inner-ring burner holes 205 on the inner side wall 207. The ring-shaped top wall is provided with a plurality of rows of outer-ring burner holes 206. All the rows of outer-ring burner holes 206 are evenly distributed on the ring-shaped top wall 217, thereby forming a plurality of circles of outer-ring burner holes 206 on the ring-shaped top wall 217.

As shown in the figure, a circle of flame-stabilizing grooves 209 connected end to end and facing a central region of the burner cap 201 are circumferentially arranged on the inner side wall 207, and the flame-stabilizing grooves 209 are in communication with the inner-ring chamber 203 through the inner-ring burner holes 205. After passing through the inner-ring burner holes 205, gas that enters the inner-ring chamber 203 flows out from the flame-stabilizing grooves 209, and forms a flame after being ignited, which may prevent the flame of the inner-ring burner holes 205 from flickering or going out.

The outer-ring burner holes 206 include a plurality of rows of flame-stabilizing holes 210 and main burner holes 211 arranged on the ring-shaped top wall 217, and a diameter of the flame-stabilizing holes 210 is less than a diameter of the main burner holes 211. In this embodiment, there are four rows of outer-ring burner holes 206. A person skilled in the art may understand that different quantities of rows of outer-ring burner holes 206 may set according to requirements. The first row of outer-ring burner holes 206 close to the inner-ring burner holes 205 are all flame-stabilizing holes 210, and the fourth row of outer-ring burner holes 206 away from the inner-ring burner holes 205 are all flame-stabilizing holes 210. The second and thirds row of outer-ring burner holes 206 are arranged such that the flame-stabilizing holes 210 and the main burner holes 211 are distributed alternately. In this way, the flame of the outer-ring burner holes 206 is more stable and even, thereby improving the combustion efficiency.

An ignition pin arranged on the burner base 300 is further included. The ignition pin is arranged at a position that nears the inner side wall 207 and that is in the central region of the burner cap 201. A distance from the inner-ring burner holes 205 to the ignition pin is less than a distance from the outer-ring burner holes 206 to the ignition pin. In this way, gas is first ignited in the inner-ring burner holes 205.

The sequence of the ignition and fire spread is that gas is first ignited in the inner-ring burner holes 205, then fire is spread to a row of outer-ring burner holes 206 closest to the inner-ring burner holes 205, and ignition is performed row by row along an extension direction of the ring-shaped top wall 217 until all the outer-ring burner holes 206 are ignited.

The distance between the inner-ring burner holes 205 and the closest row of outer-ring burner holes 206 in the vertical direction is 4 mm, so that after gas is ignited in the inner-ring burner holes 205, fire can be quickly spread to the closest outer-ring burner holes 206 even if there is no complex fire spread structure, and then fire is spread from the outer-ring burner holes 206 to adjacent outer-ring burner holes 206, thereby improving the fire spread efficiency.

The inner-ring burner holes 205 extend obliquely upward toward a central region of the burner cap, and the outer-ring burner holes 206 run through the ring-shaped top wall 217 and extend obliquely upward. An angle at which the inner-ring burner holes 205 are inclined upward relative to a horizontal plane is greater than an angle at which the outer-ring burner holes 206 are inclined upward relative to the horizontal plane. In an embodiment, an angle at which the inner-ring burner holes 205 are inclined upward relative to a horizontal plane is 45 degrees.

An extension direction of the inner-ring burner holes 205 intersects an extension direction of the outer-ring burner holes 206. In this embodiment, an extension direction of the inner-ring burner holes 205 intersects an extension direction of a row of outer-ring burner holes 206 closest to the inner-ring burner holes 205. An intersection point H at which the extension direction of the inner-ring burner holes 205 intersects the extension direction of the outer-ring burner holes 206 is located in a central region of the ring-shaped burner cap, and a height of the intersection point in a vertical direction does not exceed a top-end wall 218 of the burner cap. Therefore, even if there is no complex fire spread structure, fire in the inner ring can still be spread to the outer ring, thereby further simplifying the structure of the burner cap and improving the production efficiency and cost effectiveness of the burner cap.

In an embodiment, an angle at which the extension direction of the inner-ring burner holes 205 are inclined upward relative to the horizontal plane is 45 degrees. The ring-shaped top wall 217 is provided with a plurality of rows of outer-ring burner holes 206. An angle at which a row of outer-ring burner holes 206 closest to the inner-ring burner holes 205 are inclined upward relative to a horizontal plane is smaller than an angle at which other rows of outer-ring burner holes 206 are inclined upward relative to the horizontal plane. In this way, the extension direction of the inner-ring burner holes 205 can intersect the extension direction of the closest row of outer-ring burner holes 206, and fire in the inner ring can be spread to the outer ring even if there is no fire spread structure.

In this embodiment, an angle at which the first row of outer-ring burner holes 206 are inclined relative to a horizontal plane is smaller than an angle at which the second to fourth rows of outer-ring burner holes 206 are inclined relative to the horizontal plane, and extension directions of the second, third, and fourth rows of outer-ring burner holes 206 are parallel to each other, that is, angles at which the outer-ring burner holes 206 in the second, third, and fourth rows are inclined relative to the horizontal plane are equal.

As shown in FIG. 6, the burner cap base 202 includes a first groove 212 recessed inwardly and a second groove 213 surrounding the first groove 212, and a spacer 216 is arranged between the first groove 212 and the second groove 213. The burner cap 201 is provided with a third groove 213 and a fourth groove 214 matching the first groove 212 and the second groove 213, and the burner cap 201 is covered on the burner cap base 202. The burner cap 201 and the burner cap base 202 match each other. The first groove 212 matches the third groove 213 to form an inner-ring chamber 203, and the second groove 213 matches the fourth groove 214 to form an outer-ring chamber 204. The spacer 216 is located between an inner-ring chamber 203 and an outer-ring chamber 204 to isolate the inner-ring chamber 203 from the outer-ring chamber 204.

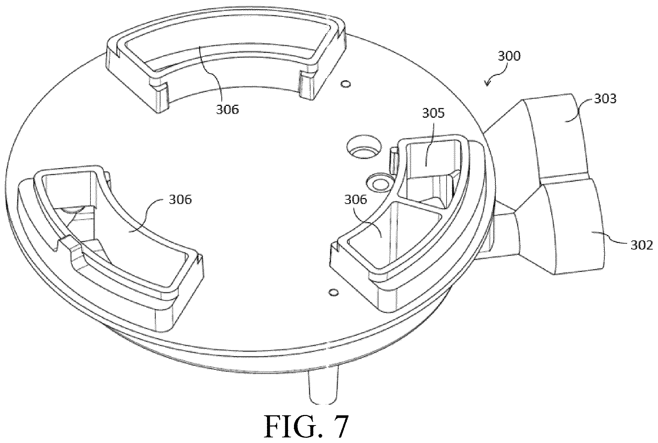

As shown in FIG. 7, the burner base 300 further includes an inner-ring ejector tube 301, an inner-ring pressure-stabilizing chamber in communication with the inner-ring ejector tube 301, and an inner-ring gas outlet 305 located above the inner-ring pressure-stabilizing chamber and being in communication with the inner-ring pressure-stabilizing chamber. After passing through the inner-ring ejector tube 301, gas enters the inner-ring pressure-stabilizing chamber, then enters the inner-ring chamber 203 through the inner-ring gas outlet 305, and finally flows to the inner-ring burner holes 205.

The burner base 300 further includes an outer-ring ejector tube 301, an outer-ring pressure-stabilizing chamber in communication with the outer-ring ejector tube 301, and an outer-ring gas outlet 306 located above the outer-ring pressure-stabilizing chamber and being in communication with the outer-ring pressure-stabilizing chamber. After passing through the outer-ring ejector tube 301, gas enters the outer-ring pressure-stabilizing chamber, then enters the outer-ring chamber 204 through the outer-ring gas outlet 306, and finally flows to the outer-ring burner holes 206.

As shown in FIG. 6, the burner cap base 202 is provided with an inner-ring gas inlet 219 matching the inner-ring gas outlet 305 and an outer-ring gas inlet 220 matching the outer-ring gas outlet 306. The inner-ring gas inlet 219 is provided in the first groove 212 and the outer-ring gas inlet is provided in the second groove 213. The inner-ring gas inlet 219 is in communication with the inner-ring chamber 203 and the inner-ring pressure-stabilizing chamber, and the outer-ring gas inlet 220 is in communication with the outer-ring chamber and the outer-ring pressure-stabilizing chamber.

A volume of the outer-ring pressure-stabilizing chamber is greater than a volume of the inner-ring pressure-stabilizing chamber, and a quantity of the outer-ring gas outlets 306 is greater than that of the inner-ring gas outlets. The shape and quantity of the inner-ring gas inlets 219 match the shape and quantity of the inner-ring gas outlets 305, and the shape and quantity of outer-ring gas inlets 220 match the shape and quantity of outer-ring gas outlets 306. In this embodiment, there are three outer-ring gas outlets 306 and one inner-ring gas outlet 305.

Various embodiments described with reference to FIG. 1 to FIG. 7 may be combined with each other in any given manners to achieve the advantages of the present invention. In addition, the present invention is not limited to the shown embodiments. Usually, apart from the shown means, other means can also be used provided that the means can also achieve the same effect.

## Claims

1. A burner head (200) for a cooktop, comprising a burner cap (201) and a burner cap base (202), wherein the burner cap (201) is covered on the burner cap base (202), the burner cap (201) matches the burner cap base (202) to form an inner-ring chamber (203) and an outer-ring chamber (204), the burner cap (201) is provided with a plurality of inner-ring burner holes (205) in communication with the inner-ring chamber (203) and a plurality of outer-ring burner holes (206) in communication with the outer-ring chamber (204), the burner cap (201) comprises an inner side wall (207) and an outer side wall (208) disposed opposite to each other, and the burner cap (201) further comprises a centripetal ring-shaped top wall (217) located between the inner side wall (207) and the outer side wall (208) and extending obliquely downward, wherein the inner-ring burner holes (205) are circumferentially arranged spaced apart on the inner side wall (207), and the outer-ring burner holes (206) are circumferentially arranged spaced apart on the ring-shaped top wall (217), **characterized in that** the inner-ring burner holes (205) extend obliquely upward toward a central region of the burner cap (201), the outer-ring burner holes (206) run through the ring-shaped top wall (217) and extend obliquely upward, and an extension direction of the inner-ring burner holes (205) intersects an extension direction of the outer-ring burner holes (206).

2. The burner head (200) according to claim 1, **characterized in that** the inner-ring burner holes (205) extend obliquely upward toward a central region of the burner cap (201), and the outer-ring burner holes (206) are located above the inner-ring burner holes (205).

3. The burner head (200) according to claim 1, **characterized in that** a circle of flame-stabilizing grooves (209) connected end to end and facing a central region of the burner cap (201) are circumferentially arranged on the inner side wall (207), and the flame-stabilizing grooves are in communication with the inner-ring chamber (203) through the inner-ring burner holes (205).

4. The burner head (200) according to claim 1, **characterized in that** there are a plurality of rows of outer-ring burner holes (206), and a distance between the inner-ring burner holes (205) and the closest outer-ring burner holes (206) in a vertical direction is 4 mm.

5. The burner head (200) according to claim 1, **characterized in that** the burner cap is ring-shaped, an intersection point H at which an extension direction of the inner-ring burner holes (205) intersects an extension direction of the outer-ring burner holes (206) is located in a central region of the burner cap (201), and a height of the intersection point in a vertical direction does not exceed a top-end wall (218) of the burner cap (201).

6. The burner head (200) according to claim 1, **characterized in that** an angle at which the inner-ring burner holes (205) are inclined upward relative to a horizontal plane is greater than an angle at which the outer-ring burner holes (206) are inclined upward relative to the horizontal plane.

7. The burner head (200) according to claim 1, **characterized in that** an angle at which the inner-ring burner holes (205) are inclined upward relative to a horizontal plane is 45 degrees.

8. The burner head (200) according to claim 1, **characterized in that** the outer-ring burner holes (206) comprise a plurality of rows of flame-stabilizing holes (210) and main burner holes (211) arranged on the ring-shaped top wall (217), a diameter of the flame-stabilizing holes (210) is less than a diameter of the main burner holes (211), and a row of outer-ring burner holes (206) close to the inner-ring burner holes (205) are all flame-stabilizing holes (210).

9. The burner head (200) according to claim 1, **characterized in that** the burner cap base (202) comprises a first groove (212) recessed inwardly and a second groove (213) surrounding the first groove (212), a spacer (216) is provided between the first groove (212) and the second groove (213), and the inner-ring chamber (203) and the outer-ring chamber (204) are isolated from each other by the spacer (216).

10. A burner (400), **characterized by** comprising the burner head (200) according to any one of claims 1 to 9 and a burner base (300), wherein the burner head (200) is detachably placed on the burner base (300).

11. The burner (400) according to claim 10, **characterized by** further comprising an ignition pin arranged on the burner base (300), wherein a distance from the inner-ring burner holes (205) to the ignition pin is less than a distance from the outer-ring burner holes (206) to the ignition pin.

12. The burner (400) according to claim 10, **characterized in that** the burner base (300) comprises an inner-ring pressure-stabilizing chamber in communication with an inner-ring ejector tube (301) and an outer-ring pressure-stabilizing chamber matching an outer-ring ejector tube (301), wherein a volume of the outer-ring pressure-stabilizing chamber is greater than that of the inner-ring pressure-stabilizing chamber.

13. The burner (400) according to claim 12, **characterized in that** a burner head base (200) further comprises a plurality of outer-ring gas outlets (306) in communication with the outer-ring pressure-stabilizing chamber and an inner-ring gas outlet (305) in communication with the inner-ring pressure-stabilizing chamber, after passing through the inner-ring ejector tube (301), gas enters the inner-ring pressure-stabilizing chamber and then enters the inner-ring chamber (203) through the inner-ring gas outlet (305), and after passing through the outer-ring ejector tube (301), the gas enters the outer-ring pressure-stabilizing chamber and then enters the outer-ring chamber (204) through the outer-ring gas outlets (306), and a quantity of the inner-ring gas outlets (305) is less than a quantity of the outer-ring gas outlets (306).

14. The burner (400) according to claim 13, **characterized in that** there are three outer-ring gas outlets (306) and one inner-ring gas outlet (305).

15. A cooktop, **characterized by** comprising the burner (400) according to any one of claims 11 to 14.

## Patentansprüche

1. Brennerkopf (200) für eine Kochstelle, der einen Brennerdeckel (201) und einen Brennerdeckelsockel (202) umfasst, wobei der Brennerdeckel (201) den Brennerdeckelsockel (202) abdeckt, so auf den Brennerdeckelsockel (202) passt, dass eine Innenringkammer (203) und eine Außenringkammer (204) entsteht, mit mehreren Innenring-Brennerlöchern (205), die mit der Innenringkammer (203) verbunden sind, und mit mehreren Außenring-Brennerlöchern (206) versehen ist, die mit der Außenringkammer (204) verbunden sind, eine innere Seitenwand (207) und eine äußere Seitenwand (208) umfasst, die sich gegenüberliegen, und ferner eine zur Mitte gerichtete, ringförmige obere Wand (217) umfasst, die zwischen der inneren Seitenwand (207) und der äußeren Seitenwand (208) liegt und schräg nach unten hin verläuft, wobei die Innenring-Brennerlöcher (205) in Umfangsrichtung an der inneren Seitenwand (207) und die Außenring-Brennerlöcher (206) in Umfangsrichtung an der ringförmigen oberen Wand (217) beabstandet angeordnet sind, **dadurch gekennzeichnet, dass** die Innenring-Brennerlöcher (205) schräg nach oben zu einem mittleren Bereich des Brennerdeckels (201) hin verlaufen, die Außenring-Brennerlöcher (206) durch die ringförmige obere Wand (217) hindurch und schräg nach oben hin verlaufen und eine Verlaufsrichtung der Innenring-Brennerlöcher (205) eine Verlaufsrichtung der Außenring-Brennerlöcher (206) schneidet.

2. Brennerkopf (200) nach Anspruch 1, **dadurch gekennzeichnet, dass** die Innenring-Brennerlöcher (205) schräg nach oben zu einem mittleren Bereich des Brennerdeckels (201) hin verlaufen und die Außenring-Brennerlöcher (206) oberhalb der Innenring-Brennerlöcher (205) liegen.

3. Brennerkopf (200) nach Anspruch 1, **dadurch gekennzeichnet, dass** ein Ring aus an den Enden verbundenen flammstabilisierenden Nuten (209), die einem mittleren Bereich des Brennerdeckels (201) zugewandt sind, in Umfangsrichtung an der inneren Seitenwand (207) angeordnet ist und die flammstabilisierenden Nuten über die Innenring-Brennerlöcher (205) mit der Innenringkammer (203) in Verbindung stehen.

4. Brennerkopf (200) nach Anspruch 1, **dadurch gekennzeichnet, dass** mehrere Reihen Außenring-Brennerlöcher (206) vorgesehen sind und ein Abstand zwischen den Innenring-Brennerlöchern (205) und den in vertikaler Richtung am nächsten gelegenen Außenring-Brennerlöchern (206) 4 mm beträgt.

5. Brennerkopf (200) nach Anspruch 1, **dadurch gekennzeichnet, dass** der Brennerdeckel ringförmig ist, ein Schnittpunkt H, an dem eine Verlaufsrichtung der Innenring-Brennerlöcher (205) eine Verlaufsrichtung der Außenring-Brennerlöcher (206) schneidet, in einem mittleren Bereich des Brennerdeckels (201) liegt und der Schnittpunkt in vertikaler Richtung nicht höher liegt als eine obere Stirnwand (218) des Brennerdeckels (201).

6. Brennerkopf (200) nach Anspruch 1, **dadurch gekennzeichnet, dass** ein Winkel, in dem die Innenring-Brennerlöcher (205) in Bezug zu einer horizontalen Ebene nach oben hin geneigt sind, größer ist als ein Winkel, in dem die Außenring-Brennerlöcher (206) in Bezug zu der horizontalen Ebene nach oben hin geneigt sind.

7. Brennerkopf (200) nach Anspruch 1, **dadurch gekennzeichnet, dass** ein Winkel, in dem die Innenring-Brennerlöcher (205) in Bezug zu einer horizontalen Ebene nach oben hin geneigt sind, 45 Grad beträgt.

8. Brennerkopf (200) nach Anspruch 1, **dadurch gekennzeichnet, dass** die Außenring-Brennerlöcher (206) mehrere Reihen flammstabilisierende Löcher (210) und an der ringförmigen oberen Wand (217) angeordnete Brennerhauptlöcher (211) umfassen, wobei ein Durchmesser der flammstabilisierenden Löcher (210) geringer ist als ein Durchmesser der Brennerhauptlöcher (211) und es sich bei einer Reihe Außenring-Brennerlöcher (206), die in der Nähe der Innenring-Brennerlöcher (205) liegen, jeweils um flammstabilisierende Löcher (210) handelt.

9. Brennerkopf (200) nach Anspruch 1, **dadurch gekennzeichnet, dass** der Brennerdeckelsockel (202) eine nach innen hin ausgesparte erste Nut (212) und eine die erste Nut (212) umgebende zweite Nut (213) umfasst, zwischen der ersten Nut (212) und der zweiten Nut (213) ein Distanzstück (216) vorgesehen ist und die Innenringkammer (203) und die Außenringkammer (204) durch das Distanzstück (216) voneinander getrennt sind.

10. Brenner (400), **dadurch gekennzeichnet, dass** er den Brennerkopf (200) nach einem der Ansprüche 1 bis 9 und einen Brennersockel (300) umfasst, wobei der Brennerkopf (200) abnehmbar auf den Brennersockel (300) aufgesetzt ist.

11. Brenner (400) nach Anspruch 10, **dadurch gekennzeichnet, dass** er ferner einen Zündstift umfasst, der an dem Brennersockel (300) angeordnet ist, wobei ein Abstand von den Innenring-Brennerlöchern (205) zum Zündstift geringer ist als ein Abstand von den Außenring-Brennerlöchern (206) zum Zündstift.

12. Brenner (400) nach Anspruch 10, **dadurch gekennzeichnet, dass** der Brennersockel (300) eine mit einem Innenring-Eindüsrohr (301) in Verbindung stehende Innenring-Druckstabilisierkammer und eine zu einem Außenring-Eindüsrohr (301) passende Außenring-Druckstabilisierkammer umfasst, wobei ein Volumen der Außenring-Druckstabilisierkammer größer ist als das der Innenring-Druckstabilisierkammer.

13. Brenner (400) nach Anspruch 12, **dadurch gekennzeichnet, dass** ein Brennerkopfsockel (300) ferner mehrere mit der Außenring-Druckstabilisierkammer in Verbindung stehende Außenring-Gasaustritte (306) und einen mit der Innenring-Druckstabilisierkammer in Verbindung stehenden Innenring-Gasaustritt (305) umfasst, Gas nach dem Hindurchströmen durch das Innenring-Eindüsrohr (301) in die Innenring-Druckstabilisierkammer und dann durch den Innenring-Gasaustritt (305) in die Innenringkammer (203) und nach dem Hindurchströmen durch das Außenring-Eindüsrohr (301) in die Außenring-Druckstabilisierkammer und dann über die Außenring-Gasaustritte (306) in die Außenringkammer (204) strömt und eine Anzahl der Innenring-Gasaustritte (305) geringer ist als eine Anzahl der Außenring-Gasaustritte (306).

14. Brenner (400) nach Anspruch 13, **dadurch gekennzeichnet, dass** drei Außenring-Gasaustritte (306) und ein Innenring-Gasaustritt (305) vorgesehen sind.

15. Kochstelle, **dadurch gekennzeichnet, dass** sie den Brenner (400) nach einem der Ansprüche 11 bis 14 umfasst.

## Revendications

1. Tête de brûleur (200) pour une surface de cuisson, comprenant un chapeau de brûleur (201) et un socle de chapeau de brûleur (202) dans laquelle le chapeau du brûleur (201) est posé recouvrant le socle de tête de brûleur (202), le chapeau de brûleur (201) correspond au socle de chapeau de brûleur (202) pour former une chambre annulaire intérieure (203) et une chambre annulaire extérieure (204), le chapeau de brûleur (201) est doté d'une pluralité de perforations annulaires intérieures de brûleur (205) communiquant avec la chambre annulaire intérieure (203) et une pluralité de perforations de brûleur annulaires extérieures (206) communiquant avec la chambre annulaire extérieure (204), le chapeau de brûleur (201) comprend une paroi latérale intérieure (207) et une paroi latérale extérieure (208) disposées l'une en face de l'autre, et le chapeau de brûleur (201) comprend en outre une paroi supérieure de forme annulaire centripète (217) située entre la paroi latérale intérieure (207) et la paroi latérale extérieure (208) et s'étendant en oblique vers le bas, dans laquelle les perforations annulaires intérieures de brûleur (205) sont arrangées sur la circonférence et espacées sur la paroi latérale intérieure (207), et les perforations annulaires extérieures de brûleur (206) sont arrangées sur la circonférence et espacées sur la paroi supérieure de forme annulaire (217), **caractérisée en ce que** les perforations annulaires intérieures de brûleur (205) s'étendent en oblique vers le haut en direction d'une zone centrale du chapeau de brûleur (201), les perforations annulaires extérieures de brûleur (206) courent sur la paroi supérieure de forme annulaire (217) et s'étendent en oblique vers le haut, et le sens d'extension des perforations annulaires intérieures de brûleur (205) forme une intersection avec le sens d'extension des perforations annulaires extérieures de brûleur (206).

2. Tête de brûleur (200) selon la revendication 1, **caractérisée en ce que** les perforations annulaires intérieures de brûleur (205) s'étendent en oblique vers le haut en direction d'une zone centrale du chapeau de brûleur (201), et les perforations annulaires extérieures de brûleur (206) sont situées au-dessus des perforations annulaires intérieures de brûleur (205).

3. Tête de brûleur (200) selon la revendication 1, **caractérisée en ce qu'**un cercle de sillons stabilisateurs de flamme (209) raccordés bout-à-bout et face à une zone centrale du chapeau de brûleur (201) sont arrangés sur la circonférence sur la paroi latérale intérieure (207) et les sillons stabilisateurs de flamme sont en communication avec la chambre annulaire intérieure (203) par les perforations annulaires intérieures de brûleur (205).

4. Tête de brûleur (200) selon la revendication 1, **caractérisée en ce qu'**il y a une pluralité de rangées de perforations annulaires extérieures de brûleur (206) et la distance entre les perforations annulaires intérieures de brûleur (205) et les perforations annulaires extérieures de brûleur (206) les plus proches dans un sens vertical, est de 4 mm.

5. Tête de brûleur (200) selon la revendication 1, **caractérisée en ce que** le chapeau de brûleur est de forme annulaire, un point d'intersection H auquel un sens d'extension des perforations annulaires intérieures de brûleur (205) forme une intersection dans un sens d'extension avec les perforations annulaires extérieures de brûleur (206) est situé dans une zone centrale du chapeau de brûleur (201) et une hauteur du point d'intersection dans un sens vertical ne dépasse pas une paroi d'extrémité supérieure (218) du chapeau de brûleur (201).

6. Tête de brûleur (200) selon la revendication 1, **caractérisée en ce qu'**un angle auquel les perforations annulaires intérieures de brûleur (205) sont inclinées vers le haut par rapport à un plan horizontal, est plus grand qu'un angle auquel les perforations annulaires extérieures de brûleur (206) sont inclinées vers le haut par rapport au plan horizontal.

7. Tête de brûleur (200) selon la revendication 1, **caractérisée en ce qu'**un angle auquel les perforations annulaires intérieures de brûleur (205) sont inclinées vers le haut par rapport à un plan horizontal, est de 45 degrés.

8. Tête de brûleur (200) selon la revendication 1, **caractérisée en ce que** les perforations annulaires extérieures de brûleur (206) comprennent une pluralité de rangées de perforations stabilisatrices de flamme (210) et de perforations de brûleur principales (211) arrangées sur la paroi supérieure de forme annulaire (217), un diamètre des perforations stabilisatrices de flamme (210) est inférieur à un diamètre des perforations principales de brûleur (211) et une rangée de perforations annulaires extérieures de brûleur (206) proche des perforations annulaires intérieures de brûleur (205) sont toutes des perforations stabilisatrices de flamme (210).

9. Tête de brûleur (200) selon la revendication 1, **caractérisée en ce que** le socle de chapeau de brûleur (202) comprend un premier sillon (212) creusé vers l'intérieur et un deuxième sillon (213) entourant le premier sillon (212), une entretoise (216) est prévue entre le premier sillon (212) et le deuxième sillon (213) et la chambre annulaire intérieure (203) ainsi que la chambre annulaire extérieure (204) sont isolées l'une de l'autre par l'entretoise (216).

10. Brûleur (400), **caractérisé par le fait qu'**il comprend la tête de brûleur (200) selon l'une quelconque des revendications 1 à 9 et un socle de brûleur (300), dans lequel la tête de brûleur (200) est placée amovible sur le socle de brûleur (300).

11. Brûleur (400) selon la revendication 10, **caractérisé en ce qu'**il comprend en outre une tigette d'allumage disposée sur le socle de brûleur (300), dans lequel une distance des perforations annulaires intérieures de brûleur (205) à la tigette d'allumage est inférieure à une distance des perforations annulaires extérieures de brûleur (206) à la tigette d'allumage.

12. Brûleur (400) selon la revendication 10, **caractérisé en ce que** le socle de brûleur (300) comprend une chambre annulaire intérieure stabilisant la pression en communication avec un tube éjecteur annulaire intérieur (301) et une chambre annulaire extérieure stabilisant la pression correspondant à un tube éjecteur annulaire extérieur (301), dans lequel un volume de la chambre annulaire extérieure stabilisant la pression est plus grand que celui de la chambre annulaire intérieure stabilisant la pression.

13. Brûleur (400) selon la revendication 12, **caractérisé en ce qu'**un socle de tête de brûleur (300) comprend en outre une pluralité de sorties de gaz annulaires extérieures (306) en communication avec la chambre annulaire extérieure stabilisant la pression et une sortie annulaire intérieure de gaz (305) en communication avec la chambre annulaire intérieure stabilisant la pression, après passage à travers le tube éjecteur annulaire intérieur (301), le gaz pénètre dans la chambre annulaire intérieure stabilisant la pression puis pénètre dans la chambre annulaire intérieure (203) par la sortie annulaire intérieure de gaz (305) et après passage par le tube éjecteur annulaire extérieur (301), le gaz pénètre dans la chambre annulaire extérieure stabilisant la pression puis pénètre dans la chambre annulaire extérieure (204) par les sorties de gaz annulaires extérieures (306) et une quantité des sorties annulaires intérieures de gaz (305) est inférieure à une quantité des sorties annulaires extérieures de gaz (306).

14. Brûleur (400) selon la revendication 13, **caractérisé en ce qu'**il y a trois sorties annulaires extérieures de gaz (306) et une sortie annulaire intérieure de gaz (305).

15. Surface de cuisson **caractérisée par le fait qu'**elle comprend le brûleur (400) selon l'une quelconque des revendications 11 à 14.
